# EUROPÄISCHE PATENTSCHRIFT

(11) **EP 2 385 929 B1**
(45) Veröffentlichungstag und Bekanntmachung des Hinweises auf die Patenterteilung: **23.05.2018**
(21) Anmeldenummer: 09760100.9
(22) Anmeldetag: 13.11.2009
(51) Int. Cl.: C01C 1/02, C01C 1/10, C01C 1/12, B01D 19/00, B01D 53/14, C01B 17/16

(54) **VERFAHREN UND ANLAGE ZUR GEWINNUNG VON NH3 AUS EINEM NH3 UND SAUERGASE ENTHALTENDEN GEMISCH**
METHOD AND PLANT FOR OBTAINING NH3 FROM A MIXTURE COMPRISING NH3 AND ACIDIC GASES
PROCEDE ET INSTALLATION POUR RECUPERER LE NH3 A PARTIR D'UN MELANGE CONTENANT DU NH3 ET DES GAZ ACIDES

(30) Priorität: 20.11.2008 DE 102008058143
(43) Veröffentlichungstag der Anmeldung: 16.11.2011
(73) Patentinhaber: Air Liquide Global E&C Solutions Germany GmbH, 60439 Frankfurt am Main (DE)
(72) Erfinder: UNGAR, Gert, 60598 Frankfurt (DE); LINICUS, Matthias, 65817 Eppstein (DE)
(74) Vertreter: Keil & Schaafhausen Patent- und Rechtsanwälte PartGmbB
(86) Internationale Anmeldenummer: PCT/EP2009/008113
(87) Internationale Veröffentlichungsnummer: WO 2010/057597

(56) Entgegenhaltungen:
- EP-A1- 0 212 690
- DE-A1- 2 744 437
- DE-B- 1 038 705
- GB-A- 768 830
- US-A- 3 972 693
- US-A- 5 122 165

## Beschreibung

### Technisches Gebiet

Die vorliegende Erfindung betrifft ein Verfahren und eine Anlage zur Gewinnung von NH₃ aus einem NH₃, H₂S- und/oder CO₂-haltiges Sauergas und leicht siedende wasserlösliche organische Komponenten aufweisenden Gemisch, insbesondere Abwasser.

Die Abtrennung von NH₃ aus einem derartigen Gemisch ist bekannt und basiert darauf, dass NH₃ mit den Sauergasen CO₂ und H₂S in wässrigen Lösungen Azeotrope bildet. Die Azeotrope sind umso ärmer an Sauergasen, je höher die Temperatur und je niedriger die NH₃-Konzentration in der Flüssigkeit ist. Dadurch kann man in einem Entsäurer, der bei hoher Sumpftemperatur arbeitet, als Kopfprodukt ein NH₃-freies Sauergas erhalten, während man im Sumpf eine wässrige Lösung erhält, die das gesamte NH₃ und nur einen geringen Teil der Sauergase aus dem Zulauf enthält. In einem NH₃-Abtreiber, der mit einer niedrigeren Sumpftemperatur und in der Regel mit einer höheren NH₃-Konzentration arbeitet, erhält man ein Sumpfprodukt, das die gesamten Sauergase enthält, die aus dem Entsäurersumpf stammen. Hierfür benötigt man einen relativ geringen NH₃-Überschuss. Das Kopfprodukt besteht aus NH₃, welches noch Sauergase in geringer Konzentration enthält. In einem Sauergasabsorber werden aus dem sauergashaltigen NH₃ die Sauergase in wässrigem NH₃ absorbiert. In einem Totalabtreiber werden aus einer wässrigen Lösung von NH₃, CO₂, H₂S und zahlreichen weiteren flüchtigen sowie nicht flüchtigen Komponenten (je nach Herkunft des Einsatzes) alle flüchtigen Komponenten abgetrieben, so dass man als Sumpfprodukt ein Abwasser erhält, das frei von flüchtigen Komponenten ist.

Üblicherweise wird das NH3-haltige Gemisch dem Sumpf des Sauergasabsorbers zugegeben. Auf den Kopf der Kolonne wird wässriges NH₃ oder reines Wasser gegeben, welches in einem gekühlten Absorptionskreislauf NH₃ absorbiert, wodurch sich wässriges NH₃ bildet, in welchem die Sauergase absorbiert werden. Das Sumpfprodukt wird dem NH₃-Abtreiber zugeführt, dessen Kopfdämpfe, die noch etwas CO₂ enthalten, in den Sauergas-Absorber geführt werden. Das Sumpfprodukt des NH₃-Abtreibers wird dem Entsäurer zugeführt. Auf den Kopf des Entsäurers wird reines Wasser zugegeben, das auch aus dem Sumpf des Totalabtreibers stammen kann, um NH₃ aus dem Sauergas vollständig zu absorbieren. Das Sumpfprodukt des Entsäurers wird dem Totalabtreiber zugeführt, dessen Kopfprodukt wird in den Sumpf des Sauergas-Absorbers geführt. Das Sumpfprodukt ist NH₃ und CO₂-freies Abwasser.

Aus der DE 25 27 985 ist eine Variante dieses Verfahrens bekannt, bei der der flüssige Einsatz dem Entsäurer zugegeben wird. Ein Teil wird vorgewärmt und unten zugegeben, während ein Teil weiter oben zugegeben wird, um Wasserdampf zu kondensieren und den größten Teil des NH₃ zu absorbieren.

Bei dem in der EP 0 212 690 B1 offenbarten Verfahren wird der Hauptteil des flüssigen Einsatzes dem Totalabtreiber vorgewärmt zugegeben, während der Rest kalt dem Entsäurer zugeführt wird. Das Kopfprodukt des Totalabtreibers wird weitgehend kondensiert und dann dem NH₃-Abtreiber weiter unten als der Sumpf des Sauergas-Absorbers zugegeben. Dieses Verfahren ist dann besonders günstig, wenn die Sauergaskonzentration in Einsatz niedrig ist.

Das Verfahren nach der EP 0 654 443 A1 fasst Entsäurer und Totalabtreiber in einer Kolonne zusammen. In der Mitte der Kolonne werden entsäuerte Dämpfe abgezogen und bei gleichem Druck weitgehend kondensiert. Die nicht kondensierten Dämpfe werden weiter oben in den Entsäurer zurückgeführt. Die Flüssigkeit wird in den NH₃-Abtreiber geführt, der mit dem Sauergas-Absorber zu einer Kolonne zusammengefasst ist.

Das Verfahren nach der EP 1 135 331 B1 unterscheidet sich von dem eingangs beschriebenen Verfahren dadurch, dass die Kopfdämpfe des Totalabtreibers kondensiert werden, wobei die Flüssigkeit in den NH₃-Abtreiber geführt wird.

Die EP 0 212 690 A1 beschreibt die Aufgabe eines Abwassers auf eine Abtriebskolonne (Totalabtreibekolonne), aus der man dann als Kopfprodukt ein an NH₃, CO₂ und H₂S reiches Gemisch abzieht. Das Gemisch zerlegt man in mindestens einer weiteren Abtreibekolonne in ein NH₃-reiches und ein an den Sauergasen CO₂ und H₂S reiches Gemisch. Das NH₃-reiche Gemisch wird mit flüssigem Ammoniak gewaschen. Das Kopfprodukt der Totalabtreibekolonne wird in einem Kondensator bei einem Druck von 1 bis 7 bar gekühlt und so weitgehend in eine Flüssigphase überführt, wobei die Flüssigphase 70 bis 100 % des dem Kondensator zugeführten NH₃ enthält. Die Flüssigphase wird mit einer Temperatur von 30 bis 90 °C einer unter einem Druck von 1 bis 4 bar arbeitenden zweiten Abtreibekolonne (NH₃-Abtreibekolonne) aufgegeben, von der als Kopfprodukt ein NH₃-reiches Gasgemisch abgezogen wird. Dieses Gemisch wird mit Wasser und Ammoniak gewaschen und das derart gewaschene NH₃-Gas verflüssigt.

Die US 5,122,165 A ist auf ein Verfahren und eine Vorrichtung zur Entfernung von toxischen flüchtigen organischen Verbindungen (VOCs), flüchtige anorganische Verbindungen (VICs) und oberflächenaktive Mittel aus einem kontaminierten flüssigen Strom, insbesondere Grundwasser, gerichtet. Dazu wird eine Reihe von chemischen Reinigungsschritten wie eine pH-Justierung und die Verwendung mit UV mit physikalischen Reinigungsschritten wie Strippen und Adsorption verbunden.

Aus der GB 768 830 A ist ebenfalls ein Verfahren zur Gewinnung von Ammoniak aus ammoniakhaltigem Wasser bekannt. Insbesondere können in diesem Wasser noch andere Stoffe wie Phenole, Kohlendioxyd, Schwefelwasserstoff, Fettsäuren, Ether, Ketone, Kohlenwasserstoffe, andere flüchtige Stoffe oder zwei oder mehrere dieser Stoffe, enthalten sein. Wesentlicher Aspekt dieses Verfahrens ist, dass das Wasser in einem Sättiger komprimiert wird, so dass Wasserdampft entsteht, der dann zum Austreiben des Ammoniaks verwendet wird.
Die US 3,972,693 A (D4) lehrt ein Verfahren zur Aufarbeitung der bei der Entgasung oder Vergasung von Kohlen anfallenden Abwasser durch Extraktion gelöster organischer Stoffe mittels eines mit Wasser nicht oder nur wenig mischbaren Lösungsmittels. Danach werden die im extrahierten Wasser verbliebenen Lösungsmittelreste und der darin enthaltenen Mengen von CO₂, H₂S und NH₃ mittels Dampf abgetrieben. Ammoniak aus dem extrahierten Wasser wird in einer Kolonne mit einem Verstärkerteil abgetrieben.
Die DE 27 44 437 A1 ist auf die Reinigung eines wässrigen Abwasserstroms aus der Kohlevergasung gerichtet. Dazu wird das Abwasser mit einem wasserunlöslichen Lösungsmittel extrahiert und das Extrakt weiterverarbeitet, um das Lösungsmittel zurückzugewinnen. Aus dem wässrigen Rückstand wird dann NH₃ in einer Abtriebskolonne entfernt. Dazu wird ein Teil des Kopfprodukts der Abtriebskolonne als unkondensierter Dampf entfernt und einer Waschkolonne zugeführt, in der stufenweise Wasser, geringe Mengen Ammoniak und alle sauren Gase kondensiert werden. Das Kondensat, das alle sauren Gase enthält, wird aus dem oberen Teil der Waschkolonne abgezogen und in einen separaten Aufkocher zur Erhitzung überführt. Das Sumpfprodukt der Waschkolonne wird in eine unter Druck stehende Entsäuerungskolonne eingebracht, aus der über Kopf die sauren Gase H₂S und CO₂; abgezogen werden, während aus dem Sumpf eine ammoniakreiche Lösung zurück in die Abtriebskolonne geführt wird.

Bei den oben genannten Verfahren können sich flüchtige wasserlösliche organische Komponenten insbesondere im Sauergas-Absorber so weit anreichern, dass die Verfahren nicht mehr funktionieren.

### Beschreibung der Erfindung

Aufgabe der vorliegenden Erfindung ist es daher, ein Verfahren und eine Anlage zur Gewinnung von NH₃ zur Verfügung zu stellen, bei dem eine starke Anreicherung organischer Komponenten vermieden wird.

Diese Aufgabe wird mit den Merkmalen des Anspruchs 1 gelöst. Ein Teilstrom der Flüssigphase aus dem Sauergas-Absorber wird abgezogen und derart aufgearbeitet, dass man gasförmiges NH₃ mit einem reduzierten Gehalt an flüchtigen organischen Komponenten erhält, das in den Sauergas-Absorber zurückgeführt wird.

Es hat sich überraschenderweise gezeigt, dass der Gehalt an flüchtigen wasserlöslichen organischen Komponenten in der Flüssigphase des Sauergas-Absorbers über das erfindungsgemäße Verfahren derart begrenzt werden können, dass diese den reibungslosen Ablauf nicht stören.

Die durch die Aufarbeitung des abgezogenen Teilstroms des Sauergas-Absorbers anfallenden Fraktionen, die die entfernten flüchtigen organischen Komponenten der aus dem Sauergas-Absorber abgezogenen Flüssigphase enthalten, können aus dem Prozess ausgeschleust und der Entsorgung zugeführt werden. Das Verfahren eignet sich wenn die leicht siedenden wasserlöslichen organischen Komponenten Alkohole, Ketone, Nitrile und/oder Pyridinbasen enthalten. Der aus dem Sauergas-Absorber abgezogene Teilstrom einer ersten Strippkolonne zugeführt, in der alle flüchtigen Komponenten weitgehend abgetrieben werden. Das Kopfprodukt der Strippkolonne wird teilkondensiert und die verbleibenden Dämpfe werden in den Sauergas-Absorber zurückgeführt. Dies hat den Vorteil, dass ein Großteil der ursprünglich vorhandenen wasserlöslichen flüchtigen organischen Verbindungen in der kondensierten Fraktion verbleibt, wohingegen die rückgeführten Dämpfe einen geringeren Gehalt an flüchtigen organischen Verbindungen aufweisen.
Um die Gesamtausbeute des Prozesses zu verbessern, wird das erhaltene Teilkondensat einer weiteren Strippkolonne zugeführt, in der NH₃ und Sauergase so weit abgetrieben werden, dass die organischen Komponenten im Sumpf aufkonzentriert werden. Das Kopfprodukt der zweiten Strippkolonne, dessen Anteil an flüchtigen organischen Verbindungen entsprechend weiter verringert ist, wird in den Sauergas-Absorber zurückgeführt.
Es hat sich gezeigt, dass die Abtrennung von flüchtigen organischen Verbindungen über mehrere Strippkolonnen besonders effektiv ist, wenn die Strippkolonne(n) jeweils bei einem Druck von 2 bis 20 bar betrieben werden. Bevorzugt wird der Druck auf 4 bis 16 bar, besonders bevorzugt auf etwa 6,5 bar eingestellt.

Das Sumpfprodukt der zweiten Strippkolonne kann in einer weiteren Ausführungsform auf den Druck des Sauergas-Absorbers entspannt und mit dem Sumpfprodukt einer Kolonne vermischt werden, in welcher das NH₃, beispielsweise durch Destillation, gereinigt wird. Entspannungsdämpfe werden in diesem Fall dem Sauergas-Absorber zugeführt.

Es kann vorkommen, dass sich schwerer siedende wasserlösliche organische Komponenten im oberen Teil des NH₃-Abtreibers stärker anreichern als im Sauergas-Absorber. In diesem Fall kann auch aus dem Oberteil des NH₃-Abtreibers ein flüssiger oder dampfförmiger Teilstrom abgezogen werden, der wie oben beschrieben aufgearbeitet wird.

Das letztlich am Kopf des Sauergas-Absorbers weitgehend von Sauergas befreite NH₃ wird vorzugsweise weiteren Reinigungsstufen zugeführt und/oder verflüssigt.

In Weiterbildung des Erfindungsgedankens wird das zum Sauergas-Absorber geleitete wässrige NH₃, das als Absorptionsmittel dient, aufgeteilt. Dabei wird ein Teil des wässrigen NH₃ auf den Kopf des Sauergas-Absorbers aufgegeben und ein Teil des wässrigen NH₃ wird dem untersten Absorptionskreislauf des Sauergas-Absorbers zugeführt. Überraschenderweise hat sich gezeigt, dass dadurch die Gesamtkonzentration der flüchtigen organischen Komponenten in der Flüssigphase des Sauergas-Absorbers zusätzlich vermindert werden kann.

Des Weiteren betrifft die vorliegende Erfindung eine Anlage zur Gewinnung von NH₃ mit den Merkmalen des Anspruchs 6, welche insbesondere zur Durchführung des zuvor beschriebenen Verfahrens geeignet ist.

Erfindungsgemäß weist die Anlage einen mit wässrigem NH₃ betriebenen Sauergas-Absorber auf, wobei dem Sauergas-Absorber eine erste Strippkolonne nachgeschaltet ist, der ein Teilstrom der Flüssigphase aus dem Sauergas-Absorber zugeführt wird, und wobei der Kopf der ersten Strippkolonne mit dem Sauergas-Absorber verbunden ist.

Zur Erhöhung der Gesamtausbeute weist die erfindungsgemäße Anlage eine weitere Strippkolonne auf, der das Teilkondensat der ersten Strippkolonne zugeführt wird und in der NH₃ und Sauergase weiter abgetrieben werden, wobei der Kopf der weiteren Strippkolonne mit dem Sauergas-Absorber verbunden ist.
Das aus dem Sauergas-Absorber abgezogene NH₃ wird in einem Verflüssiger verflüssigt, wobei nach einem weiteren Erfindungsmerkmal der Verflüssiger über Rückführleitungen mit dem Kopf des Sauergas-Absorbers verbunden ist. Darüber hinaus ist eine Verbindung des Verflüssigers über Rückleitungen mit dem untersten Absorptionskreislauf des Sauergas-Absorbers vorgesehen.
Eine erfinderische Ausgestaltung der Anlage besteht darin, dass die NH₃-Abtriebskolonne über eine Leitung mit der ersten Strippkolonne verbunden ist, um einen flüssigen oder dampfförmigen Teilstrom aus der NH₃-Abtriebskolonne auf die erste Strippkolonne leiten zu können.
Weitere Merkmale, Vorteile und Anwendungsmöglichkeiten der Erfindung ergeben sich auch aus der nachfolgenden Beschreibung von Ausführungsbeispielen und der Zeichnung.

### Kurzbeschreibung der Zeichnung

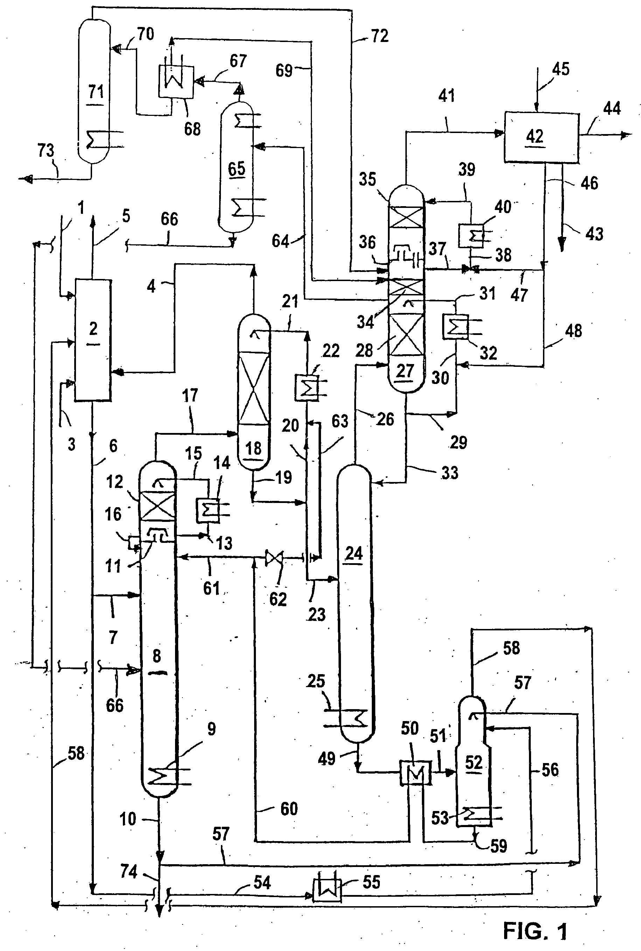

Fig. 1 zeigt ein Verfahrensfließbild einer Anlage zur Gewinnung von NH₃ aus einem NH₃ und Sauergase enthaltenden Gemisch gemäß eines bevorzugten Ausführungsbeispiels der vorliegenden Erfindung.

### Detaillierte Beschreibung einer bevorzugten Ausführungsform

Ein zu behandelndes Abwasser, bei dem es sich üblicherweise um ein Kondensat aus der Entgasung oder Vergasung von Kohle handelt, wird in der Leitung 1 herangeführt. In einer Kolonne 2 wird das Abwasser mit Strippgas aus der Leitung 3 behandelt, weiteres Strippgas kommt aus den Leitungen 58 und 4. Das beladene Strippgas verlässt die Kolonne 2 über Leitung 5 und wird einer nicht dargestellten Aufarbeitung zugeführt.

Das in der Leitung 6 aus der Kolonne 2 kommende Wasser enthält nun noch vor allem NH₃, CO₂ und H₂S sowie weitere Gase in geringerer Konzentration. Das Abwasser wird zum größten Teil durch die Leitung 7 einer Totalabtriebskolonne 8 aufgegeben, in welcher alle abtreibbaren Gase aus dem Abwasser entfernt werden. Die Totalabtriebskolonne 8, deren Böden zur Vereinfachung nicht dargestellt sind, weist im Sumpf einen an sich bekannten Aufkocher 9 auf, der für den nötigen Auftrieb der Gase sorgt. Behandeltes Abwasser strömt über Leitung 10 ab. Ein kleiner Teil des behandelten Abwassers wird auf den Kopf der Entsäuerungskolonne 52 geleitet, während der Rest über Leitung 74 die Anlage verlässt. Die in der Totalabtriebskolonne 8 abgetriebenen Gase gelangen durch den gasdurchlässigen Boden 11 nach oben in den Teilkondensator 12, in welchem sie mit umlaufendem gekühltem Kondensat berieselt werden, um vor allem Wasserdampf zu kondensieren. Das Kondensat strömt über Leitung 13 unter der Wirkung einer nicht dargestellten Pumpe durch einen äußeren Kühler 14 und gelangt in der Leitung 15 zurück in den Teilkondensator 12. Überschüssiges Kondensat wird durch den Überlauf 16 der Totalabtriebskolonne 8 zugeführt.

Das Kopfprodukt der Totalabtriebskolonne 8 verlässt den Teilkondensator 12 in der Leitung 17 und tritt in einen weiteren Kondensator 18 ein, in dem eine intensive Kühlung erfolgt, so dass sich eine Flüssigphase ausbildet. Der Kondensator 18 besitzt einen Flüssigkeitsumlauf durch die Leitungen 19, 20 und 21, wobei ein externer Kühler 22 die Temperatur niedrig hält. Die Flüssigphase des Kondensators 18 nimmt keine Inertgase, wie N₂, H₂, CO und CH₄ auf. Diese ziehen in der Leitung 4 ab und dienen in der Kolonne 2 als zusätzliche Strippgase.

Ein Teilstrom der Flüssigphase aus der Leitung 19 wird über Leitung 23 abgezogen und einer NH₃-Abtriebskolonne 24, in deren Sumpf ein Aufkocher 25 angeordnet ist, aufgegeben. Die NH₃-Abtriebskolonne hat z.B. zehn bis dreißig Böden, wobei man die Flüssigphase aus der Leitung 23 etwa auf einen mittleren Boden zuführt. Das Kopfprodukt der NH₃-Abtriebskolonne 24, ein NH₃-reiches Gas, das Reste von Sauergasen enthält, wird in der Leitung 26 zunächst dem Sauergas-Absorber 27 in der ersten Waschstufe 28 zugeführt. Diese ist mit einem Absorptionskreislauf mit den Leitungen 29, 30 und 31 mit externem Kühler 32 ausgestattet. Ein Teilstrom des Absorbats gelangt aus dem Sumpf des Sauergas-Absorbers 27 durch die Leitung 33 als Rückfluss auf den Kopf der NH₃-Abtriebskolonne 24. Über der Waschstufe 28 des Sauergas-Absorbers 27 befinden sich eine zweite Waschstufe 34 und eine dritte Waschstufe 35, zwischen denen ein Boden 36 angeordnet ist, der nach oben Gas und nach unten Flüssigkeit durchlässt. Die dritte Waschstufe 35 ist mit einem Absorptionskreislauf mit den Leitungen 37, 38 und 39 sowie dem externen Kühler 40 ausgestattet. Aus der dritten Waschstufe 35 gelangt praktisch reines NH₃ über Leitung 41 zu der NH₃-Verflüssigung 42. Über Leitung 43 werden flüssiges NH₃ und über Leitung 44 organische Komponenten aus der NH₃-Verflüssigung 42 ausgeleitet. Als Absorptionsmittel wird der NH₃-Verflüssigung 42 sauberes Wasser über Leitung 45 zugeführt. Als Absorptionsflüssigkeit des Sauergas-Absorbers 27 dient wässriges NH₃ aus der NH₃-Verflüssigung 42, das über Leitung 46 abgeführt und zu einem Teil über Leitung 47 in die Leitung 37 eingespeist und der Waschstufe 35 zugeführt wird und zum andern Teil über die Leitung 48 in die Leitung 30 des Absorptionskreislaufs der Waschstufe 28 eingespeist wird.

Das aus dem Sumpf der NH₃-Abtriebskolonne 24 abgezogene Wasser fließt in Leitung 49 unter der Einwirkung einer nicht dargestellten Pumpe zunächst zu einem Wärmetauscher 50 und tritt durch die Leitung 51 in die Entsäuerungskolonne 52 ein, in der mit Hilfe des Aufkochers 53 ein an NH₃, CO₂ und H₂S reiches Gasgemisch abgetrieben wird. Das über Leitung 6 aus dem Sumpf der Kolonne 2 abgezogene Wasser strömt nach dem Durchlauf durch den Wärmetauscher 55 über Leitungen 54 und 56 zur Entsäuerungskolonne 52. Weiter oben wird über Leitung 57aus der Totalabtriebskolonne 8 abgeführtes gekühltes Wasser in die Entsäurungskolonne eingespeist. Mit dem gekühlten Wasser wird das Gasgemisch gewaschen bevor es über die Leitung 58 zur Weiterverarbeitung als Strippgas zur Kolonne 2 geführt wird. In der Entsäuerungskolonne 52 fällt als Sumpfprodukt entsäuertes Wasser an, das NH₃ und geringere Mengen an CO₂ und H₂S enthält. Dieses Sumpfprodukt wird in der Leitung 59 abgezogen und gibt zunächst einen Teil seiner Wärme im Wärmetauscher 50 ab und gelangt dann über die Leitungen 60 und 61 teilweise in die Totalabtriebskolonne 8. Ein durch das Ventil 62 einstellbarer Teilstrom wird in der Leitung 63 abgeführt und der Flüssigphase, die in den Leitungen 19, 20 aus der Kondensatorkolonne 18 abströmt, zugemischt.

Ein Teil der Flüssigphase des Sauergas-Absorbers 27 wird über die Leitung 64 einer ersten Strippkolonne 65 zugeführt, in der NH₃, Sauergase sowie flüchtige organische Komponenten weitgehend abgetrieben werden. Das Sumpfprodukt der ersten Strippkolonne 65 wird über die Leitung 66 auf einen unteren Boden der Totalabtriebskolonne 8 geführt. Das Kopfprodukt der ersten Strippkolonne 65 wird über die Leitung 67 einem Kondensator 68 zugeführt und auf eine mit Kühlwasser erzielbare Temperatur abgekühlt. Der größte Teil des Wassers und der organischen Komponenten wird kondensiert sowie ein Teil des NH₃ und der Sauergase absorbiert.

Die Dämpfe werden über die Leitung 69 in den Sauergas-Absorber 27 zurückgeführt und die Flüssigkeitsphase über die Leitung 70 einer zweiten Stripperkolonne 71 aufgegeben, in der NH₃ und Sauergase so weit abgetrieben werden, dass die organischen Komponenten im Sumpf aufkonzentriert werden und nur zu einem geringen Teil die Strippkolonne 71 mit dem Kopfprodukt verlassen. Das Kopfprodukt wird über Leitung 72 zurück in den Sauergas-Absorber 27 geführt.

Bei einer besonderen Ausführungsform wird ein Teil des über die Leitung 46 entnommenen rückgeführten, wässrigen NH₃ abgezweigt und nicht über die Leitungen 47 und 39 dem Kopf des Sauergas-Absorbers 27, sondern über die Leitungen 48, 30 und 31 und über den externen Kühler 32 dem unteren Absorptionskreislauf des Sauergas-Absorbers 27 zugeführt. Während, wie bei der bevorzugten Ausführungsform beschrieben, durch die Zuführung des wässrigen NH₃ als Absorptionsmittel ausschließlich auf den Kopf des Sauergas-Absorbers 27 Gesamtkonzentrationen der organischen Komponenten in der Flüssigphase des Sauergas-Absorbers 27 von 17,5 Gew.-% erreicht werden, lässt sich die Konzentration bei Einleitung eines Teilstroms in den unteren Absorptionskreislauf des Sauergas-Absorbers 27 auf 9,5 Gew.-% reduzieren.

Das Sumpfprodukt der zweiten Strippkolonne 71 kann über die Leitung 73 einer weiteren Entsorgung oder, nachdem es zuvor mit dem gekühlten Sumpfprodukt einer Kolonne vermischt wird, in der das NH₃, beispielsweise durch Destillation gereinigt wird, auf den Druck des Sauergas-Absorbers 27 entspannt werden. Der Entspannungsdampf wird dann auch dem Sauergas-Absorber 27 zugeführt.

### Beispiel:

In einer der Zeichnung entsprechenden Verfahrensführung wurden für die verschiedenen Leitungen die in Tabelle 1 angegebenen Gehalte an NH₃, CO₂, H₂S, H₂O und organischen Verbindungen ermittelt:

**Tabelle 1**

| Leitung | H₂O [kmol/h] | NH₃ [kmol/h] | H₂S [kmol/h] | CO₂ [kmol/h] | org. Verb. [kmol/h] | Temp. [°C] | Druck [bar] |
|---|---|---|---|---|---|---|---|
| 1 | 193448,9 | 932,7 | 26,1 | 856,6 | 50,2 | 43 | 6 |
| 3 | 23,8 | 0,0 | 8,1 | 304,2 | 0,0 | 47 | 2 |
| 5 | 90,7 | 0,1 | 30,9 | 1159,9 | 0,8 | 46 | 2 |
| 6 | 193373,7 | 953,8 | 231,2 | 184,8 | 51,2 | 110 | 2 |
| 23 | 11092,4 | 4245,4 | 696,2 | 203,0 | 201,0 | 60 | 3 |
| 26 | 61,1 | 1336,8 | 24,5 | 0,1 | 106,1 | 62 | 3 |
| 33 | 832,6 | 469,9 | 23,1 | 0,1 | 59,3 | 50 | 3 |
| 74 | 194450,8 | 2,1 | 0,0 | 0,0 | 0,4 | 63 | 19 |
| 43 | 0,0 | 809,2 | 0,0 | 0,0 | 0,0 | 43 | 18 |
| 49 | 11864,0 | 3378,5 | 694,8 | 203,0 | 154,2 | 84 | 3 |
| 57 | 9088.6 | 44.8 | 10.9 | 8.7 | 2.4 | 40 | 16 |
| 58 | 3,4 | 0,0 | 227,3 | 184,6 | 0,0 | 45 | 14 |
| 59 | 21970,5 | 3423,3 | 478,6 | 27,0 | 166,6 | 154 | 14 |
| 63 | 8832,1 | 1376,2 | 192,4 | 10,8 | 63 | 93 | 11 |
| 64 | 337,6 | 171,2 | 1,6 | 0,0 | 20,9 | 51 | 7 |
| 66 | 313,4 | 0,0 | 0,0 | 0,0 | 0,0 | 163 | 7 |
| 67 | 24,2 | 171,2 | 1,6 | 0,0 | 20,9 | 100 | 6 |
| 69 | 0,2 | 118,8 | 0,0 | 0,0 | 7,0 | 36 | 3 |
| 70 | 24,0 | 52,4 | 1,5 | 0,0 | 13,9 | 50 | 6 |
| 72 | 0,2 | 39,8 | 0,1 | 0,0 | 0,5 | 40 | 3 |
| 73 | 23,8 | 12,7 | 1,4 | 0,0 | 13,4 | 90 | 6 |
| 44 | 23,3 | 48,4 | 0,0 | 0,0 | 34,2 | 95 | 17 |
| 47 | 576,1 | 210,3 | 0,0 | 0,0 | 8,7 | 70 | 17 |
| 48 | 562,9 | 205,5 | 0,0 | 0,0 | 8,5 | 70 | 17 |
| 45 | 1132,4 | 0,0 | 0,0 | 0,0 | 0,0 | 40 | 5 |

### Bezugszeichen

- 2: Abstreifgaskolonne
- 8: Totalabtriebskolonne
- 9: Aufkocher
- 11: gasdurchlässiger Boden
- 12: Teilkondensator
- 14: Kühler
- 16: Überlauf
- 18: Kondensator-Kolonne
- 22: Kühler
- 24: NH₃-Abtriebskolonne
- 28: Waschstufe
- 32: Kühler
- 27: Sauergas-Absorber
- 35: Waschstufe
- 36: Überlauf
- 40: Kühler
- 42: NH₃-Verflüssiger
- 50: Wärmetauscher
- 52: Entsäuerungskolonne
- 53: Aufkocher
- 65: erste Strippkolonne
- 68: Kondensator
- 71: zweite Strippkolonne

Die übrigen Bezugszeichen betreffen Leitungen.

## Patentansprüche

1. Verfahren zur Gewinnung von NH₃ aus einem Gemisch aus NH₃, H₂S- und/oder CO₂-haltigem Sauergas und leicht siedenden wasserlöslichen organischen Komponenten, welches aus einem NH₃-Abtreiber stammt, wobei das Sauergas aus dem Gemisch in einem Sauergas-Absorber mit wässrigem NH₃ absorbiert und am Kopf des Sauergas-Absorbers weitgehend von Sauergas befreites NH₃ entnommen wird, **dadurch gekennzeichnet, dass** ein Teilstrom der Flüssigphase aus dem Sauergas-Absorber abgezogen wird, dass der aus dem Sauergas-Absorber abgezogene Teilstrom einer ersten Strippkolonne zugeführt wird, in der die flüchtigen Komponenten weitgehend abgetrieben werden, so dass man gasförmiges NH₃ mit einem reduzierten Gehalt an Alkohole, Ketone, Nitrile und/oder Pyridinbasen enthaltenden flüchtigen organischen Komponenten erhält, das in den Sauergas-Absorber zurückgeführt wird, indem das Kopfprodukt der Strippkolonne teilkondensiert wird und die verbleibenden Dämpfe in den Sauergas-Absorber zurückgeführt werden und dass das Teilkondensat der ersten Strippkolonne einer weiteren Strippkolonne zugeführt wird, in der NH₃ und Sauergase soweit abgetrieben werden, dass die organischen Komponenten im Sumpf aufkonzentriert werden, und dass das Kopfprodukt der weiteren Strippkolonne in die Sauergas-Absorber zurückgeführt wird.

2. Verfahren nach Anspruch 1, **dadurch gekennzeichnet, dass** die Strippkolonne(n) bei einem Druck von 2 bis 20 bar[a], vorzugsweise 4 bis 16 bar[a] betrieben wird/werden.

3. Verfahren nach einem der Ansprüche 1 oder 2, **dadurch gekennzeichnet, dass** das Sumpfprodukt der weiteren Strippkolonne auf den Druck des Sauergas-Absorbers entspannt wird, mit dem Sumpfprodukt einer Kolonne vermischt wird, in welcher das NH₃, beispielsweise durch Destillation, gereinigt wird, und die Entspannungsdämpfe dem Sauergas-Absorber zugeführt werden.

4. Verfahren nach einem der vorhergehenden Ansprüche, **dadurch gekennzeichnet, dass** das zum Sauergas-Absorber geleitete wässrige NH₃ aufgeteilt wird, und dass ein Teil des wässrigen NH₃ auf den Kopf des Sauergas-Absorbers aufgegeben wird und ein Teil des wässrigen NH₃ dem untersten Absorptionskreislauf des Sauergas-Absorbers zugeführt wird.

5. Verfahren nach einem der vorhergehenden Ansprüche, **dadurch gekennzeichnet, dass** aus der NH₃-Abtriebskolonne (24) ein flüssiger oder dampfförmiger Teilstrom abgezogen und der ersten Strippkolonne (65) zugeführt wird.

6. Anlage zur Gewinnung von NH₃, insbesondere nach einem Verfahren gemäß einem der vorhergehenden Ansprüche, welche eine NH₃-Abtriebskolonne (24) und einen mit wässrigem NH₃ betriebenen Sauergas-Absorber (27) aufweist, **dadurch gekennzeichnet, dass** dem Sauergas-Absorber (27) eine erste Strippkolonne (65) nachgeschaltet ist, der ein Teilstrom der Flüssigphase aus dem Sauergas-Absorber zugeführt wird und von der gasförmiges NH₃ mit einem reduzierten Gehalt an Alkohole, Ketone, Nitrile und/oder Pyridinbasen enthaltenden flüchtigen organischen Komponenten erhalten wird, dass der Kopf der ersten Strippkolonne mit dem Sauergasabsorber verbunden ist, und dass das Teilkondensat der ersten Strippkolonne (65) einer weiteren Strippkolonne (71) zugeführt wird, in der NH₃ und Sauergase weiter abgetrieben werden, wobei der Kopf der weiteren Strippkolonne mit dem Sauergas-Absorber (27) verbunden ist.

7. Anlage nach Anspruch 6, wobei das aus dem Sauergas-Absorber (27) abgezogene NH₃ in einem Verfüssiger (42) verflüssigt wird, **dadurch gekennzeichnet, dass** der Verflüssiger (42) über Rückführleitungen (47, 39) mit dem Kopf des Sauergas-Absorbers (27) verbunden ist.

8. Anlage nach Anspruch 6, **dadurch gekennzeichnet, dass** der Verflüssiger (42) über Rückführleitungen (48, 30 mit dem untersten Absorptionskreislauf des Sauergas-Absorbers (27) verbunden ist.

## Claims

1. A process for recovering NH₃ from a mixture of NH₃, acid gas containing H₂S and/or CO₂, and low-boiling water-soluble organic components originating from an NH₃ stripper, whereby the acid gas in this mixture is absorbed with aqueous NH₃ in an acid gas absorber and at the top of the acid gas absorber NH₃ largely liberated from acid gas is removed, **characterized in that** a partial stream of the liquid phase is withdrawn from the acid gas absorber, that the partial stream withdrawn from the acid gas absorber is supplied to a first stripping column, in which the volatile components largely are stripped, so that gaseous NH₃ with reduced content of volatile organic components containing alcohols, ketones, nitriles and/or pyridine bases is obtained which is s recirculated into the acid gas absorber, **in that** the top product of the stripping column is partially condensed, and the remaining vapours are recirculated into the acid gas absorber and that the partial condensate of the first stripping column is supplied to a further stripping column, in which NH₃ and acid gases are stripped to such an extent that the organic components are concentrated in the sump, and that the top product of the further stripping column is recirculated into the acid gas absorber.

2. The process according to claim 1, **characterized in that** the stripping column(s) is/are operated at a pressure of 2 to 20 bar[a], preferably 4 to 16 bar[a].

3. The process according to any of claims 1 or 2, **characterized in that** the bottom product of the further stripping column is expanded to the pressure of the acid gas absorber, is mixed with the bottom product of a column in which the NH₃ is purified, for instance by distillation, and the flash vapours are supplied to the acid gas absorber.

4. The process according to any of the preceding claims, **characterized in that** the aqueous NH₃ conveyed to the acid gas absorber is split up, and that one part of the aqueous NH₃ is charged to the top of the acid gas absorber and one part of the aqueous NH₃ is supplied to the bottommost absorption circuit of the acid gas absorber.

5. The process according to any of the preceding claims, **characterized in that** from the NH₃ stripping column (24) a liquid or vaporous partial stream is withdrawn and supplied to the first stripping column (65).

6. A plant for recovering NH₃, particularly by a process according to any of the preceding claims, which includes an NH₃ stripper (24) and an acid gas absorber (27) operated with aqueous NH₃, **characterized in that** downstream of the acid gas absorber (27) a first stripping column (65) is supplied, to which a partial stream of the liquid phase from the acid gas absorber and from which gaseous NH₃ is obtained with a reduced content of volatile organic components containing alcohols, ketones, nitriles and/or pyridine bases, that the top of the first stripping column (65) is connected with the acid gas absorber, and partial condensate of the first stripping column (65) is supplied to further stripping column (71), in which NH₃ and acid gases continue to be stripped, wherein the top of the further stripping column is connected with the acid gas absorber (27).

7. The plant according to claim 6, wherein the NH₃ withdrawn from the acid gas absorber (27) is liquefied in a liquefier (42), **characterized in that** the liquefier (42) is connected with the top of the acid gas absorber (27) via return conduits (47, 39).

8. The plant according to claim 6, **characterized in that** the liquefier (42) is connected with the bottommost absorption circuit of the acid gas absorber (27) via return conduits (48, 30).

## Revendications

1. Procédé de préparation de NH₃ à partir d'un mélange qui est constitué de NH₃, de gaz acide contenant du H₂S et/ou CO₂ et de constituants organiques hydrosolubles ayant une basse température d'ébullition et qui est issu d'un dispositif destiné à chasser le NH₃, ledit gaz acide étant enlevé dudit mélange par absorption, dans un absorbeur de gaz acide, à l'aide de NH₃ aqueux pour ainsi obtenir, en tête dudit absorbeur de gaz acide, du NH₃ essentiellement exempt de gaz acide, **caractérisé en ce que** l'on retire un flux partiel de la phase liquide de l'absorbeur de gaz acide, que l'on introduit le flux partiel retiré de l'absorbeur de gaz acide dans une première colonne de strippage laquelle permet de chasser la plupart des constituants volatils pour ainsi obtenir du NH₃ gazeux qui présente une teneur réduite en constituants organiques volatils contenant des alcools, cétones, nitriles et/ou bases pyridiques et qui est recyclé dans l'absorbeur de gaz acide en soumettant le produit de tête de ladite colonne de strippage à une condensation partielle et en recyclant les vapeurs résiduelles dans l'absorbeur de gaz acide, et que l'on introduit le condensat partiel de la première colonne de strippage dans une colonne de strippage supplémentaire permettant de chasser le NH₃ et les gaz acides jusqu'à ce que les constituants organiques soient concentrés dans le fond, et que l'on recycle le produit de tête de la colonne de strippage supplémentaire dans l'absorbeur de gaz acide.

2. Procédé selon la revendication 1, **caractérisé en ce que** l'on fait fonctionner la/les colonne(s) de strippage à une pression comprise entre 2 et 20 bar[a], de préférence entre 4 et 16 bar[a].

3. Procédé selon l'une des revendications 1 ou 2, **caractérisé en ce que** l'on détend le produit de fond de la colonne de strippage supplémentaire jusqu'à atteindre la pression de l'absorbeur de gaz acide, pour ensuite le mélanger avec le produit de fond d'une colonne destinée à purifier le NH₃, par exemple en soumettant ce dernier à une distillation, et l'on introduit les vapeurs issues de la détente dans l'absorbeur de gaz acide.

4. Procédé selon l'une des revendications précédentes, **caractérisé en ce que** le NH₃ aqueux est divisé, suite à son acheminement vers l'absorbeur de gaz acide, pour introduire une partie du NH₃ aqueux dans la tête de l'absorbeur de gaz acide et introduire une partie du NH₃ aqueux dans le circuit d'absorption le plus bas de l'absorbeur de gaz acide.

5. Procédé selon l'une des revendications précédentes, **caractérisé en ce que** l'on retire un flux partiel, liquide ou sous forme de vapeur, de la colonne destinée à chasser le NH₃ (24) pour introduire celui-ci dans la première colonne de strippage (65).

6. Installation permettant de préparer du NH₃, notamment suivant un procédé selon l'une des revendications précédentes, et comportant une colonne (24) destinée à chasser le NH₃ et un absorbeur de gaz acide (27) fonctionnant à l'aide de NH₃ aqueux, **caractérisée en ce que** l'on introduit un flux partiel de la phase liquide, issu de l'absorbeur de gaz acide, dans une première colonne de strippage (65) qui est disposée en aval de l'absorbeur de gaz acide (27) et qui permet d'obtenir du NH₃ gazeux ayant une teneur réduite constituants organiques volatils contenant des alcools, cétones, nitriles et/ou bases pyridiques, que la tête de la première colonne de strippage est reliée à l'absorbeur de gaz acide, et que l'on introduit le condensat partiel de la première colonne de strippage (65) dans une colonne de strippage (71) supplémentaire destinée à chasser encore plus de NH₃ et de gaz acides, la tête de la colonne de strippage supplémentaire étant reliée à l'absorbeur de gaz acide (27) .

7. Installation selon la revendication 6, dans laquelle le NH₃ retiré de l'absorbeur de gaz acide (27) est liquéfié dans un condenseur (42), **caractérisée en ce que** le condenseur (42) est relié à la tête de l'absorbeur de gaz acide (27) à travers de conduites de recyclage (47, 39).

8. Installation selon la revendication 6, **caractérisée en ce que** le condenseur (42) est relié au circuit d'absorption le plus bas de l'absorbeur de gaz acide (27) à travers de conduites de recyclage (48, 30).
